# EUROPEAN PATENT APPLICATION

(11) **EP 3 222 986 A1**
(43) Date of publication of application: **27.09.2017**
(21) Application number: 17162550.2
(22) Date of filing: 23.03.2017
(51) Int. Cl.: G01N 1/06

(54) **MICROTOMY METHOD AND DEVICE**

(30) Priority: 23.03.2016 GB 201604931
(71) Applicant: CellPath Ltd, Newtown, Powys SY16 4LE (GB)
(72) Inventor: WEBBER, Peter, Newtown, Powys SY16 4LE (GB); WEBBER, Paul, Newtown, Powys SY16 4LE (GB); WEBBER, Philip, Newtown, Powys SY16 4LE (GB); HAINE, Neil, Newtown, Powys SY16 4LE (GB)
(74) Representative: Geary, Stephen

(57) **Abstract**

A microtomy method, blade holder and microtomy apparatus is described in which the microtomy blade or sample block is agitated ultrasonically. The sample block and/or cutting blade may be ultrasonically agitated and the invention provides a device for use in microtomy comprising a blade holder adapted to be agitated ultrasonically and to receive a sample sectioning blade and an ultrasonic source arranged to in use to cause the blade to vibrate in one or more directions within the plane of the blade.

## Description

This invention relates to a method of preparing a section of a sample and to a sample sectioning device. In particular, the invention relates to a method of preparing a section of a biological sample in a microtomy process employing ultrasound to provide relative movement between a sample block and a blade and to a blade holder or sample block adapted for ultrasonic agitation in a microtomy process.

Biological materials for histological examination are processed in large quantities for a wide range of diagnostic purposes. Tissue samples are prepared typically by a process involving fixing a tissue sample, embedding the tissue sample in paraffin wax to form a block of wax with the sample embedded in the block, referred to herein as a "sample block" and slicing the embedded sample very thinly using a microtome to provide a thin section of the sample. Prior to embedding, the sample it is treated using solutions selected according to the nature of the sample. The sample is suitably fixed, dehydrated, cleared, infiltrated with molten paraffin wax and optionally stained. Typical fluids employed in such processing may include ethanol, xylene, formaldehyde and water. Typically, large numbers of samples, for example as many as 300 may be processed together. The sample is embedded by contacting it with a paraffin wax whilst in a histology cassette and is typically cooled for 20 minutes to 1 hour. Embedding the tissue in paraffin wax provides it with the rigidity necessary for further processing in particular in preparing a thin section using a microtome

Microtomes have been employed for many years for preparing biological samples into thin slices to provide thin sections of the sample suitable for analysis, for example microscopic analysis. Rotary and sliding microtomes are known. Typically a microtome has a blade mounted in a blade holder which is arranged to move in a pre-determined path. A sample holder is arranged to carry a sample, typically embedded in a wax block, and is movable relative to the blade so as to place the sample in the pathway of the blade whereby a thin section of the sample is sliced from the block. Blades are typically made of stainless steel and may be coated with other metals to improve performance characteristics such as blade longevity and strength.

A blade may be employed in many cutting operations but eventually the blade becomes blunt, damaged or otherwise impaired and the sample section may not be suitable for its intended use. Once the blade no longer provides samples of adequate quality, the blade must be replaced before further sectioning operations can take place. This is costly and inconvenient, microtomy blades typically being the most expensive consumable item in a microtomy laboratory. An increase in blade longevity is therefore desirable.

As the blade deteriorates through use, a greater force may be required in order to slice the sample. This may affect sample quality and may increase the risk of accident to the user. A sample section may typically be from a millimetre to a micron scale, for example 2 to 3 microns thick and as the force to slice the section is increased, deformation or compression of the section may occur and the section may exhibit excessive wrinkles. Other undesirable artefacts may be introduced to the tissue section including score lines, tearing and holes and renders the sample useless for analysis. The blade edge may skip along the surface of the sample block, particularly where the sample is hard or fibrous. This is commonly known as "chattering". Difficulties may also be encountered where the sample is friable.

The thin section is typically floated in a water bath and this may allow some wrinkles to disappear as the section floats but chattering to any significant degree renders the sample useless and a new section of the same sample must be acquired. This repetition is inconvenient and costly and interrupts downstream analysis while the blade is changed and a further section of the same sample acquired. A need for improvement in the quality of sections remains.

The number of cutting operations for a given type of blade may differ depending on a number of factors including the hardness of the sample and the block in which the sample is embedded. Presently, specialist cutting blades may be required depending on the sample or specimen and it would be desirable to be able to use standard blades for a wider range of samples and applications. Different samples and applications may require a blade of lower profile or higher profile and desirably a wide angle range and the need to exchange blades according to the required circumstances is inconvenient and costly. For larger sample sizes of the order of 10s of microns, a reduction in cutting force would also be desirable to prolong the life of the blade.

Microtomy operations are typically carried out by highly skilled and trained technicians. Time spent replacing a blade and other downtime is therefore costly and inconvenient. Furthermore, blades are costly and regular replacement of blades is expensive.

There are therefore a number of drawbacks with conventional microtomy techniques including undesirable downtime, through the need to change blades, chattering and poor section quality which may require a repeat sample to be taken, the need to improve the cutting process so that thinner sections may be obtained, the need to use specialist blades and a range of blade profiles.

We have now found that some or all of these drawbacks may be ameliorated or removed by providing for ultrasonic agitation of a blade or a sample block in a microtome process. Improvements in preparation of thin section samples may be achieved such that downtime associated with the need to replace a blade and with disruption to the microtomy process is reduced. By causing the blade or sample block to vibrate in certain dimensions at an ultrasonic frequency, samples may be cut using a lower cutting force. The lower cutting force associated with ultrasonic agitation reduces the occurrence of chattering, especially with harder and more fibrous tissue specimens. Improved slicing of a sample provides sections of requisite quality. The lower cutting force required to obtain samples of appropriate quality reduces the need to employ specialist blades, enables a wider range of blade angle and improves longevity of the blade, thereby reducing the costs of replacing blades and downtime associated with changing the blade.

Furthermore, for a given blade, the number of slicing operations of the blade may be increased as compared to conventional techniques. The present invention therefore provides the use of an ultrasonically agitated sample sectioning device.

In a first aspect, the invention provides a method of preparing a section of a sample comprising providing a sample for sectioning in a sample block, providing a cutting blade in a sample section device wherein the cutting blade is adapted to move to provide a slicing locus and the blade and/or sample block is subjected to ultrasound whereby the blade and/or sample block vibrates and effecting relative movement between the sample block and the cutting blade such that the cutting locus of the blade intersects the sample in the sample block causing slicing engagement between the blade and the sample in the sample block thereby to produce a sliced section of the sample.

By providing for the sample block or the blade or both to be ultrasonically agitated, problems associated with conventional microtomy processes may be ameliorated or reduced.

The invention provides in a second aspect a microtomy apparatus comprising a sample block holder, a base for carrying the sample block holder, the base being adapted to receive a blade holder for carrying a cutting blade, means to effect relative movement between the sample block holder and the blade such that the cutting locus of the blade intersects the sample in the sample block causing slicing engagement between the blade and the sample and wherein the microtomy apparatus and/or blade holder comprises an ultrasonic source arranged to, in use, cause the sample block and/or the cutting blade to vibrate.

Whilst the sample block may be ultrasonically agitated, preferably the blade holder is ultrasonically agitated. Suitably, the blade holder is agitated in one or more directions within the plane of the blade. Where the sample block is agitated, it is suitably agitated in one or more directions parallel to the plane of the cutting blade or one or more directions in a plane of the sample section which is to be sliced from the sample block.

In a third aspect, the invention provides a device for use in microtomy comprising a blade holder adapted to be agitated ultrasonically and to receive a sample sectioning blade and an ultrasonic source arranged to, in use, to cause the blade to vibrate in one or more directions within the plane of the blade.

In a fourth aspect the invention provides a sample sectioning device for use in microtomy comprising a blade holder adapted to be agitated ultrasonically, a replaceable sample sectioning blade having a cutting edge and mounted in the blade holder and an ultrasonic source arranged to cause the blade to vibrate in the direction of the cutting edge or at right angles thereto within the plane of the blade.

Ultrasonically agitating the blade and/or the sample block allows a reduction in the cutting forces applied to the blade in sectioning. This reduces the compression force acting on the sample and allows samples of thinner section to be acquired, for example less than 2 microns and less than 1 micron. Ultrasonic agitation of the blade and/or the sample block enables the blade edge to remain sharp for longer thereby increasing the life of the blade significantly. This provides significant cost savings, the blade typically being the most costly consumable in a histology laboratory.

Suitably, the blade is planar and has a cutting edge along the edge of the plane. The plane of the blade is defined herein as having an "x" direction parallel to the cutting edge and a "y" direction perpendicular to the cutting edge of the blade. The "z" direction is defined as being perpendicular to the plane of the blade.

Suitably, the force required to provide a section employing the invention is at least 10% less than that required to obtain a sample of comparable quality using the same blade without ultrasonic agitation and preferably at least 20% less, more preferably at least 30 % less and especially at least 40% less.

The blade is arranged to vibrate in at least the "x" direction or the at least the "y" direction and preferably in both the "x" and the "y" direction.

In a preferred embodiment, there is no substantial vibration in the "z" direction.

The blade is suitably made of steel, for example stainless steel. The invention avoids the need to employ specialist blades or blades comprising costly materials, for example diamond.

The blade and/or sample block is suitably agitated by ultrasound of a pre-determined frequency, preferably generated by a transducer which converts energy into ultrasonic vibration. Suitably the transducer is an electromechanical transducer and converts an electrical energy into a mechanical vibration. Suitably, the transducer is located adjacent to or forms a part of the blade holder and/or sample block holder. As desired, more than one transducer may be employed to provide simultaneous agitation of the blade holder and the sample block.

The blade may be attached to the blade holder by conventional means.

Suitably the transducer provides ultrasound at up to 100000 cycles per second, preferably at 10000 or 25000 to 50000 cycles per second, for example at a frequency of 15000 cycles per second, or at 40000 to 45000 Hz cycles per second for example 43000Hz.. The transducer suitably generates motion at the blade cutting edge in the "x" and/or "y" direction having a desired amplitude related to applied voltage. In one embodiment, the amplitude in the "x" direction is up to 20 microns, more preferably up to 10 microns, for example 6 microns or less and suitably greater than 1 micron or 2 microns. The amplitude in the "y" direction is up to 100 microns, more preferably up to 75 microns, for example 60 microns or less and desirably at least 20 and especially at least 40 microns. The amplitude in the "z direction is preferably minimal, suitably less than 10, more preferably less than 5 and especially less than 2 microns.

At the location(s) at which the blade holder is attached to the microtome, the amplitude in the "y" direction is suitably less than 5, more preferably less than 2 and especially less than 1 micron.

Suitably, the sample sectioning device is adapted to provide a section of a sample having a thickness of greater than 1 micron to 1 mm or from 5 microns to 1 mm.

The blade holder is mounted on or otherwise attached to the microtomy apparatus, for example by clamping. The blade holder may be mounted on the microtome directly or indirectly, for example by a mounting. The blade holder may be connected by an arrangement which allows the angle of the blade holder and blade relative to the microtome to be set by the user and then maintained in position during use. The blade holder may be mounted on a mounting using a trunnion arrangement in which the blade and blade holder may be rotated about an axis parallel to the blade edge so as to adjust the angle of the blade edge. The blade holder may comprise lugs, engageable with a mounting allowing rotation of the blade holder and upon setting the desired orientation, the lugs may be secured so as to fix the blade at the selected angle for use.

Suitably the blade holder is configured and operated in a manner such that it has node points at the location at which the blade holder is attached to the microtome. The term "node point" as employed herein refers to a point on a standing wave generated by the transducer where the wave has a minimum and desirably zero amplitude. The location of the node point typically changes with a change in frequency so the frequency generated or tuned by the transducer is suitably tailored so the node points are located at the point(s) of attachment of the blade holder to the microtome. Vibration at the point of attachment of the blade holder to the microtome is thereby suitably reduced or avoided. Suitably, there is no vibrational amplitude at the point of attachment in the "Z" direction and preferably also not in the "y".

Suitably the blade has two opposed sides with an angle between the sides, known as a facet angle of 20 to 45 degrees, preferably 30 to 40 degrees, for example 35 degrees.

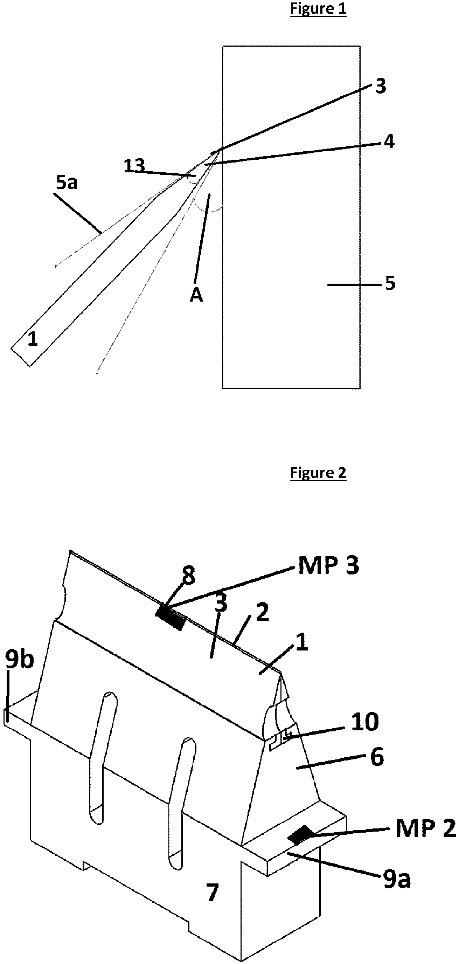

The position of the blade relative to the sample to be sectioned is suitably adjustable such that the angle between the side of the blade and the sample block, known as the blade clearance angle, may be adjusted according to the required use and to take account of different blades having different facet angles. Suitably, the blade clearance angle is from 0.5 degrees and may be up to 10 degrees, preferably from 0.8 to 7 degrees and especially from 1 to 5 degrees. An illustration of this arrangement is shown in Figure 1.

In use, the blade holder and specimen held in the sample block holder are moved relatively so the cutting path or locus of the cutting blade intersects the sample block and a section of the sample is produced by the blade slicing through the sample.

The microtomy apparatus may be manually operable, automated or semi-automated. In one embodiment, the microtomy apparatus may comprise means for ultrasonically agitating the sample block. Suitably, the microtomy apparatus comprises a known microtomy apparatus and a sample sectioning device comprising an ultrasonically agitated blade holder as described herein. The sample sectioning device according to the present invention may be retrofitted to existing microtomy apparatus.

The microtomy apparatus may be a reciprocating microtome or a rotary microtome. The microtome comprises means to clamp a sample block, means to move the sample block and the blade holder may be an integral part of the microtomy apparatus or be releasably secured to the apparatus. The microtome apparatus may be manual, semi-automated or automated.

The device comprising a blade holder according to the invention as defined herein may be retrofitted to existing microtomy apparatus. The invention provides a device adapted to be carried by a microtomy apparatus comprising a blade holder adapted to be agitated ultrasonically and to receive a sample sectioning blade and an ultrasonic source arranged to, in use, to cause the blade to vibrate in one or more directions within the plane of the blade and means for securing the device to the microtomy apparatus.

Preferably, the microtomy apparatus provides a mechanism to allow the sample to be retracted away from the blade during use, particularly as the blade makes an upstroke on the sample.

The present invention is further described by way of example only with reference to the accompanying drawings, in which:
Figure 1 shows a perspective view of a sample section device comprising a blade holder and blade according to the invention;
Figure 2 shows side elevation of a blade position relative to a sample black in which it is positioned to test the penetration force of the blade;
Figure 3 shows a schematic arrangement for determining penetrative force;
Figure 4 shows a perspective view of an alternative sample section device comprising a blade holder and blade according to the invention;
Figure 5 shows side elevation a sample section device according to the invention positioned to slice a section from a wax block and sample embedded in a histology cassette; Figures 6 and 7 show a plot of penetrative cutting force for several samples cut in accordance with a method and device of the present invention (right hand columns of each pair of columns) and samples cut in a conventional cutting arrangement (left hand columns of each pair of columns); and
Figure 8 shows a graph of variation in cutting force with time for a method and device according to the invention as compared to a conventional method and device

In Figure 1, the blade 1 has a blade edge 2 and two opposed sides 3, 4. In use the blade 1 is positioned relative to a sample block 5 and the angle A between the blade face 3 and the sample block 5 is referred to as the blade clearance angle. The angle between the two opposed sides 3, 4 of the blade 1 is known as the facet angle. During use, the blade and/or sample are moved into a position where the cutting edge of the blade intersects the sample and the blade is moved so as to cut a section 5a of the sample whereupon the section is separated from the sample block and rests on the side of the blade or blade holder, the blade is retracted from the sample with the section and the section is then subjected to downstream processing as appropriate.

Figure 2 shows a sample section device according to the invention comprising a blade 1 and a blade holder 6 and an ultrasonic source housed within block 7 of the blade holder 6. Figure 2 shows a point 8 at a central point on the blade edge at which measurement of the vibration (amplitude) of the blade edge is carried out. This is also denoted MP1 signifying "measurement point 1". The blade holder is connectable to the base of a microtome at lugs 9a and 9b. The blade holder suitably has a node point as measured at location MP2 on lugs 9a and 9b and measurement of vibration at this point may be carried out to ascertain the appropriate frequency to apply to secure minimal vibrational amplitude whereby there is minimal and preferably no movement. This location is denoted MP2 "measurement point 2" and is used as a reference point at which wave amplitude is measured and from which modifications to the design of the blade holder may be made to reduce and preferably avoid vibration at this location. The blade 1 is secured to the blade holder 6 by releasable securing means 10. The releasable securing means suitably comprise complementary engaging parts formed on the blade 1 and the blade holder 6. As examples, the blade holder may be affixed to the microtome by clamping or engaged with complementary sliding parts.

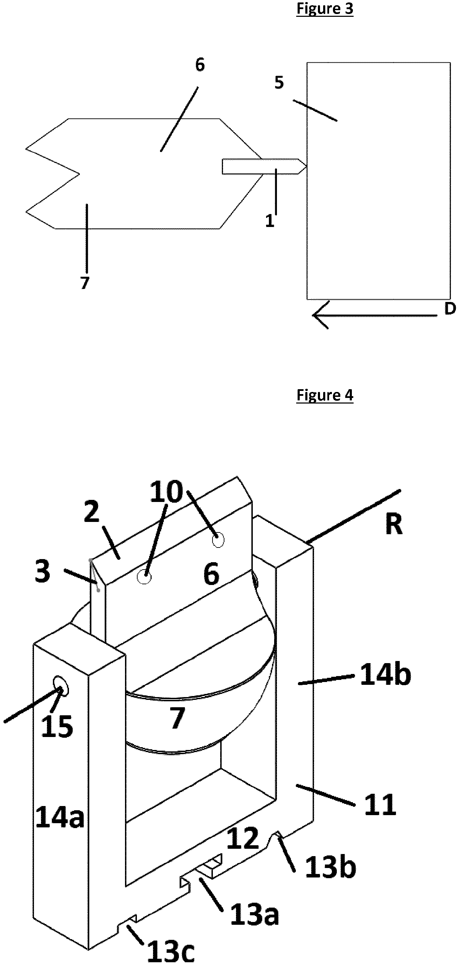

Figure 3 shows a sample sectioning device in a side elevation in an arrangement for testing penetrative force as set out in the Examples below. The block 5 is moved toward the blade 1 in direction D and the penetrative force required for the blade to penetrate into the body of the block (as opposed to cutting a section) was measured.

Figure 4 shows a sample section device according to the invention comprising a blade 1 which may be secured to the blade holder 6 by fixing means 10. The blade holder 6 houses an ultrasonic source such as a transducer within the dome-shaped part 7 and is mounted on a mounting 11 through a trunnion arrangement. The transducer is connected to an electrical supply whereby electrical energy may be converted into mechanical energy. The mounting 11 comprises a base part 12 having engaging means 13a, 13b and 13c for engaging with a microtome to securely fix the mounting 11 to the microtome and further comprises arms 14a, 14b each provided with a recess to receive a lug 15 of the blade holder 6. The blade holder is rotatable about axis R whereby the angle of the blade 1 may be altered as desired. The lugs may be securely fastened in the recess to fix the position of the blade relative to the mounting.11.

The dome shape 7 of the blade holder 6 provides another example of a blade holder and is intended to dissipate vibrations outwards to the edges of the dome so vibration is transmitted to the blade but in other directions, the vibration is minimised.

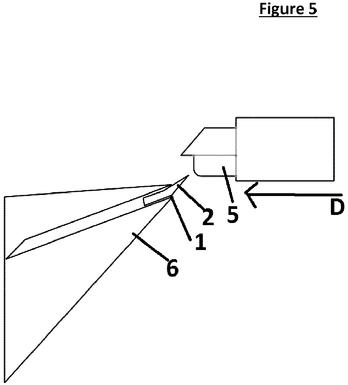

Figure 5 shows a sample sectioning device in a side elevation in an arrangement for testing cutting force as set out in the Examples below. The block 5 is moved toward the blade 1 in direction D and the cutting force required to cut the block was measured.

The invention is illustrated by the following non-limiting examples.

### Example 1

A sample sectioning device according to the invention as shown in Figure 2 was subjected to agitation in the x, y and z direction by applying voltages to the transducer as set out in Table 1 below. The transducer is located in a recess in the bottom of the blade holder. The transducer was tuned to a frequency of 40 to 44kHz. The amplitude in each dimension was measured using a laser vibrometer at measuring point MP1 on the blade edge and at measuring point MP2 on the blade holder at the points at which the blade holder is attached to a microtome.

| Vibration direction | X | | Y | | Z | |
|---|---|---|---|---|---|---|
| Measuring points (MP) | Voltage (V) | Amplitude (µm) | Voltage (V) | Amplitude (µm) | Voltage (V) | Amplitude (µm) |
| 1 | 0.8 | 3.04 | Max 14 | 53.2 | 0.5 | 1.9 |
| 2 | | | 0.2 | 0.76 | | |

The measured amplitudes are shown in Table 1 demonstrating that there was minimal movement in the x and z directions at MP1 but significant vibration in the y direction. At MP2 there was minimal movement in the y direction. The blade holder would therefore experience minimal agitation at the location at which it is connected to the microtome.

### Example 2

A sample section device as shown in Figure 2 was tested to determine penetrative force using an arrangement as shown in Figure 3. Two samples were tested; a large paraffin sample block based on a large sample cassette of around 50 to 55 by 70 to 80 by 12 to 17mm and available from Cellpath Ltd under the trade name SUPAMEGA having a depth of around two to three times that of a standard sized sample block based on a standard size histology cassette of 28 to 32 mm x 25 to 28 mm x 5 to 6 mm.

The force required to penetrate the sample by 4mm for the larger sample and 2mm for the standard sample was measured using a conventional cutting (CC) operation i.e. without ultrasonic agitation of the blade and a cutting operation using an ultrasonically agitated cutting (UAC) blade using a device as shown in Figure 2.

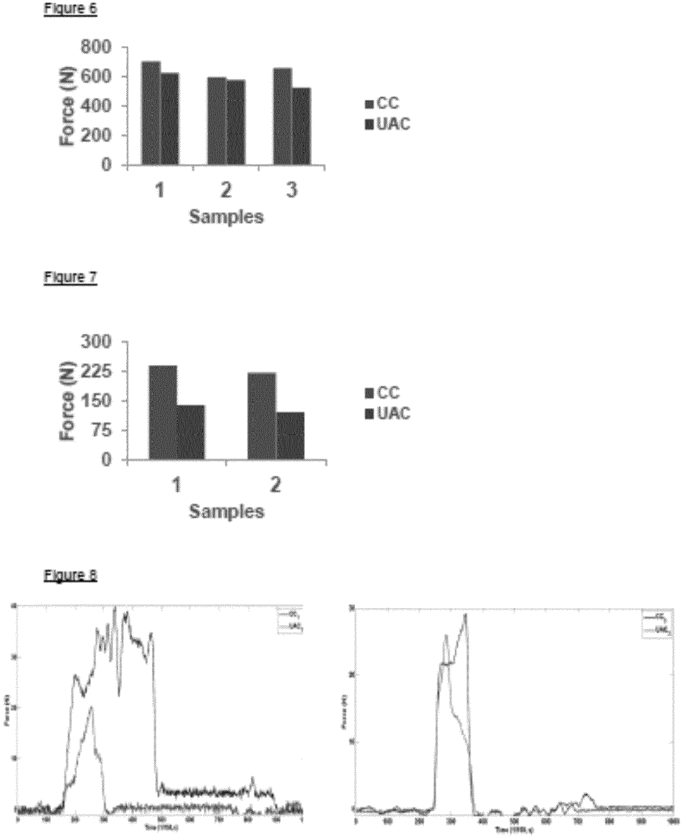

The results are shown in Figure 6 (larger sample) and Figure 7 (standard sample). A reduction in penetrative cutting force is observed in all cases and a reduction of over 40% is observed for the standard samples.

### Example 3

A sample section device as shown in Figure 2 was tested to determine cutting force required to produce a sample section of 1 mm thickness (without using any thickness control) using an arrangement as shown in Figure 5. The blade was agitated using a transducer tuning frequency of 40 to 44kHz

The force required to cut the sample was measured using a conventional cutting (CC) operation i.e. without ultrasonic agitation of the blade and a cutting operation using an ultrasonically agitated cutting (UAC) blade using a device as shown in Figure 2. The test was repeated using a different sample.

The results are shown in Figure 8. A reduction in penetrative cutting force is observed in all cases and a significant reduction of at least 10% is observed for the standard samples.

**Table 2**

| **Sample** | **Maximum force (N)** | | **Force reduction (%)** |
|---|---|---|---|
| | CC | UAC | |
| **1** | 39.3 | 20.8 | 47.1% |
| **2** | 29.2 | 26.1 | 10.6% |

The cutting force required over time was also measured and is shown in Figure 8 for the two samples. The UAC run for the first sample required both a lower level of cutting force and a shorter duration for the cutting operation. The second sample also required a lower level of cutting force.

### Example 4

Samples of skin and prostate were sectioned using a sample section device as shown in Figure 2 at a tuning frequency of 25kHz. For comparative purposes, the same samples were then sectioned using the same apparatus but without using ultrasonics. The procedure of Example 3 was employed.

The procedure using ultrasonics resulted in less sample compression and a longer blade life than that without ultrasonics.

## Claims

1. A method of preparing a section of a sample comprising providing a sample for sectioning in a sample block, providing a cutting blade in a sample section device wherein the cutting blade is adapted to move to provide a slicing locus and the blade and/or sample block is subjected to ultrasound whereby the blade and/or sample block vibrates and effecting relative movement between the sample block and the cutting blade such that the cutting locus of the blade intersects the sample in the sample block causing slicing engagement between the blade and the sample in the sample block thereby to produce a sliced section of the sample.

2. A microtomy apparatus comprising a sample block holder, a base for carrying the sample block holder, the base being adapted to receive a blade holder for carrying a cutting blade, means to effect relative movement between the sample block holder and the blade such that the cutting locus of the blade intersects the sample in the sample block causing slicing engagement between the blade and the sample and wherein the microtomy apparatus and/or blade holder comprises an ultrasonic source arranged to, in use, cause the sample block and/or the cutting blade to vibrate.

3. A microtomy apparatus according to claim 2 wherein the ultrasonic source is arranged to ultrasonically agitate the blade holder such that it vibrates in one or more directions within the plane of the blade.

4. A microtomy apparatus according to claim 2 wherein the ultrasonic source is arranged to ultrasonically agitate the sample block

5. A device for use in microtomy comprising a blade holder adapted to be agitated ultrasonically and to receive a sample sectioning blade and an ultrasonic source arranged to in use to cause the blade to vibrate in one or more directions within the plane of the blade.

6. A sample sectioning device for use in microtomy comprising a blade holder adapted to be agitated ultrasonically, a replaceable sample sectioning blade having a cutting edge and mounted in the blade holder and an ultrasonic source arranged to cause the blade to vibrate in the direction of the cutting edge or at right angles thereto within the plane of the blade.

7. A sample sectioning device according to claim 6 in which the blade is planar.

8. A sample sectioning device according to claim 6 or claim 7 having an "x" direction parallel to the cutting edge and a "y" direction perpendicular to the cutting edge of the blade wherein the blade is arranged to vibrate in the "x" direction, the "y" direction or both the "x" and the "y" direction.

9. A sample sectioning device according to claim 8 in which there is no substantial vibration in the "z" direction.

10. A sample sectioning device according to any one of claims 6 to 9 wherein the ultrasonic source is a transducer.

11. A sample sectioning device according to claim 10 wherein the transducer is located at the opposite side of the blade holder to the blade.

12. A sample sectioning device according to any one of claims 6 to 11 wherein the blade is made of steel.

13. A sample sectioning device according to any one of claims 6 to 12 wherein the ultrasonic source is arranged to cause the blade to vibrate at a frequency of at least 10000Hz.

14. A microtomy apparatus comprising a specimen holder, a base for carrying the specimen holder, a sample sectioning device according to any one of claims 5 to 13, the base being adapted to receive the sample sectioning device and means to effect relative movement between the specimen holder and the sample sectioning device.

15. A retrofittable device adapted to be carried by a microtomy apparatus comprising a device according to any one of claims 5 to 13, the device including means for securing the device to the microtomy apparatus.
